# EUROPÄISCHE PATENTSCHRIFT

(11) **EP 3 581 911 B1**
(45) Veröffentlichungstag und Bekanntmachung des Hinweises auf die Patenterteilung: **04.08.2021**
(21) Anmeldenummer: 19401022.9
(22) Anmeldetag: 04.06.2019
(51) Int. Cl.: G01M 99/00

(54) **TESTVORRICHTUNG FÜR BOHRHÄMMER**
TEST DEVICE FOR DRILLING HAMMER
DISPOSITIF D'ESSAI POUR MARTEAU DE FORAGE

(30) Priorität: 11.06.2018 DE 102018113828
(43) Veröffentlichungstag der Anmeldung: 18.12.2019
(73) Patentinhaber: Karlsruher Institut für Technologie, 76131 Karlsruhe (DE)
(72) Erfinder: Bruchmüller, Tim, 76187 Karlsruhe (DE); Dörr, Matthias, 76137 Karlsruhe (DE); Neugebauer, Wilhelm, 55122 Mainz (DE); Steck, Michael, 76137 Karlsruhe (DE); Matthiesen, Sven, 76139 Karlsruhe (DE)

(56) Entgegenhaltungen:
- CN-Y- 201 170 757
- DE-A1- 19 925 079
- KR-A- 20150 048 974
- Pierre Marcotte ET AL: "Études et recherches RAPPORT R-499", , 31. Juli 2007 (2007-07-31), XP055636660, Gefunden im Internet: URL:https://www.irsst.qc.ca/media/document s/PubIRSST/R-499.pdf?v=2019-10-29 [gefunden am 2019-10-29]

## Beschreibung

Die Erfindung betrifft eine Testvorrichtung zum Testen von schlagenden Bohrmaschinen, insbesondere Bohrhämmer gemäß dem ersten Patentanspruch.

Die Erfindung ist auf dem Gebiet der technischen Erprobung, Prüfung und Validierung technischer Systeme angesiedelt.

Eine Produktentwicklung und -optimierung von schlagenden Bohrmaschinen, insbesondere Bohrhämmer umfasst üblicherweise auch eine Durchführung von Einsatztests unter realen Bedingungen oder Bedingungen, in denen reale Bedingungen durch entsprechende Vorrichtungen modelliert oder simuliert werden. Hierzu werden Prototypen in einer Kombination von manuellen Tests mittels Versuchspersonal, Robotertests auf Beton und durch Ersatzuntergründe getestet.

Ein Einsatzuntergrund ist eine Einrichtung, die als Gegenstück für eine Bohrmaschine oder Bohrhammer einstellbare Lastaufnahmen aufweist, die mit Gegenbelastungen wie Gegenkräften, - Impulsen und -Momenten auf die Einwirkungen der Bohrmaschine, insbesondere des Bohrer einwirken. Gegenüber realen Werkstücken wie z.B. eine Betonwand hat ein Ersatzuntergrund Vorteile. Einerseits lassen sich die Gegenbelastungen exakter einstellen und erfassen, andererseits ist die Varianz der auftretenden Belastungen für Bohrer, Bohrmaschine oder Roboter bzw. Versuchspersonal geringer gegenüber Versuchen mit realen Werkstücken z.B. aus Beton. Für eine Erprobung einer Bohrmaschine ist somit oftmals eine geringere Anzahl von Versuchen erforderlich.

Bekannte Einsatzgründe zur Erprobung von schlagenden Bohrmaschinen nutzen hydraulische oder pneumatische Lastaufnahmen, insbesondere hydraulische oder pneumatische Zylinder.
[1] offenbart beispielhaft eine Testvorrichtung mit Ersatzuntergrund für schlagende Bohrmaschinen, bei dem eine Platte mittels eines Pneumatikzylinders insbesondere zur Schlagaufnahme gegen den Bohrer der Bohrmaschine verfahrbar ist. Durch eine im Zylinder integrierte Bremse sind weitere Belastungsprogramme für die Bohrmaschine, wie z.B. ein Freischlagen, d.h. einem simulierten Durchbruch, oder ein Lüften, d.h. einem Zurückziehen des Bohrers möglich. Weiterhin ist die Bohrmaschine in der Testvorrichtung um ihre Längsachse drehbar. Beschrieben ist auch ein Bremsmotor als Teil des Ersatzuntergrunds zur Aufprägung einer Drehlast. Das Drehmoment für eine Drehlast und der Gegendruck für eine Schlagfunktion sind somit einstellbar. Testvorrichtungen oder Ersatzgründe mit hydraulisch oder pneumatisch betriebenen Lastaufnahmen weisen für die Erprobung von schlagenden Bohrmaschinen jedoch grundsätzlich folgende Einschränkungen auf:
   - Steifigkeit einer Gas- oder Ölsäule in einem Zylinder reicht nicht aus, um die Steifigkeit beispielsweise eine Bearbeitung z. B. von Beton und Bohrwerkzeug nachzubilden.
   - Insbesondere hydraulisch betriebene Systeme neigen bei einer Erprobung zu Kavitation im Hydrauliksystem. Während sich eine Dämpfung in einem Hydraulikzylinder über Drosseln recht gut einstellen lässt, sorgt ein im Öl gelöstes Gas für ein zeitlich verzögertes Rückkoppeln der Dämpfungskräfte in das System.
   - Hydraulische und pneumatische Systeme zeigen ein stark temperaturabhängiges Eigenschaftsprofil.

Eine Testvorrichtung aus dem Stand der Technik ist aus "Pierre Marcotte ET AL: "Etudes et recherches RAPPORT R-499",, 31. Juli 2007 (2007-07-31), XP055636660" bekannt. Davon ausgehend liegt eine **Aufgabe der Erfindung** darin, eine Testvorrichtung für die Erprobung von schlagenden Bohrmaschinen so zu gestalten, dass die vorgenannten Einschränkungen nicht oder nur in reduzierter Form auftreten.

Die Aufgaben werden durch eine Testvorrichtung gemäß dem ersten Patentanspruch gelöst. Hierauf rückbezogene Unteransprüche geben vorteilhafte Ausgestaltungen wieder.

Zur Lösung der Aufgabe wird eine Testvorrichtung für Bohrmaschinen, vorzugsweise schlagende Bohrmaschinen oder Bohrhämmer mit einem Ersatzuntergrund vorgeschlagen. Der Ersatzuntergrund weist mehrere Komponenten, die in eine axiale Richtung orientiert aufgereiht sind und damit eine Last- und Impulsaufnahmekette in diese axiale Richtung darstellen.

Vorzugsweise umfasst die Testvorrichtung eine Halte- und Verfahrvorrichtung für eine zu testende Bohrmaschine. Die Haltevorrichtung dient der Fixierung, die Verfahrvorrichtung der lateralen Verschiebung und/oder Verschwenkung der Bohrmaschine in der Testvorrichtung und relativ zum Ersatzuntergrund. Dies ist grundsätzlich in alle drei lateralen Raumrichtungen und alle drei rotatorische Richtungen vorgesehen, vorzugsweise aber in und weiter bevorzugt um die axiale Richtung. Eine Halte- und Verfahrvorrichtung weist weiter bevorzugt mindestens ein Verfahrmittel und/oder eine Kraftquelle (z.B. hydraulischer Zylinder) sowie Kraft- und Momentaufnehmer zumindest in vorgenannter axialer Richtung, d.h. in Richtung der Last- und Impulsaufnahmekette auf. Auf diese Weise lassen sich von dem Bohrhammer auf den Ersatzuntergrund wirkende Kräfte und Bewegungen durch die Halte- und Verfahrvorrichtung erfassen und reproduzierbar erzeugen.

Die genannte axiale Richtung ist hierzu vorzugsweise geradlinig, d.h. sie folgt einer Geraden, was eine Entstehung von Querkräften in vorgenannter Last- und Impulsaufnahmekette signifikant reduziert. Weiter bevorzugt ist die Gerade eine Symmetrieachse für um diese symmetrisch angeordnete Kraftübertragungsbereiche zwischen den Komponenten, ebenfalls eine Ausgestaltung zur Minderung von Querkräften.

Weiter bevorzugt ist zur weiteren Minderung von Querkräften aufgrund von Massekräften beispielsweise durch die Komponenten die axiale Richtung in vertikaler Richtung orientiert.

Die Komponenten umfassen:
- eine axial drehbare Drehmomenteinleitung:
   Die Drehmomenteinleitung dient der Anbindung und Einleitung von Kräften und Impulsen eines Bohreinsatzes der Bohrmaschine in den Ersatzuntergrund. Die Drehmomenteinleitung ist axial drehbar gestaltet, d.h. um eine in axialer Richtung ausgerichtete Drehachse drehbar gelagert. Die Drehachse fällt bevorzugt mit der vorgenannten Symmetrieachse für um diese symmetrisch angeordnete Kraftübertragungsbereiche zwischen den Komponenten überein. Die Drehmomenteinleitung dient als Adapterelement zu einem drehenden und/oder axial schlagenden Bohreinsatz eines Bohrhammers. Sie weist hierzu eine bevorzugt verdrehungssteife, aber weiter bevorzugt kippbare mechanische Einspannung für den Bohreinsatz auf. Eine Ausgestaltung hierzu sieht einen speziellen Testbohreinsatz mit einem Nutaußenprofil sowie eine Drehmomenteinleitung mit einer entsprechenden zum Nutaußenprofil passenden Nutinnenprofilbohrung in axialer Richtung auf, womit sich beim Einstecken des Testbohreinsatzes die Nutprofile ineinander verzahnen und gegenüber Drehbewegungen in axialer Richtung eine Formschlussverbindung bilden. Weiter bevorzugt ist die Nutinnenprofilbohrung in der Drehmomenteinleitung aus der axialen Richtung kippbar.
- Mittel zur Einleitung eines Brems- oder eines Antriebsmoment in die Drehmomenteinleitung:
   Die Mittel dienen der Erzeugung und Einleitung vorzugsweise um die vorgenannte Drehachse der Drehmomenteinleitung gerichteter rotatorischer Kräfte oder vektorieller Kraftanteile in die Drehmomenteinleitung. Die Mittel umfassen folglich Erzeugungsmittel, wie vorzugsweise einen Elektromotor oder eine elektromotorische Bremse alternativ andere mechanische oder elektrodynamische oder magnetische Bremselemente. Die Mittel sind vorzugsweise unmittelbar an die an die Drehmomenteinleitung angebunden. Hierzu sind Übertragungsmittel zwischen den Erzeugungsmitteln und der Drehmomenteinleitung als weiterer Teil der Mittel vorgesehen, umfassend vorzugsweise einen Riemenantrieb mit Antriebsriemen und Riemenscheiben, einen Zahnriemenantrieb mit Antriebszahnriemen und Zahnriemenscheiben, einen Zahnradantrieb mit Zahnrädern und Ritzeln und/oder ein Gestänge. Die Übertragungsmittel weisen bevorzugt eine Über- oder Untersetzung, eine Umkehr, eine Änderung der Drehachsenrichtung und/oder eine Konvertierung (z.B. Translation in Rotation oder umgekehrt) der übertragenen Bewegungen auf, d.h. sie dienen auch als Getriebe zwischen den vorgenannten Erzeugungsmitteln und der Drehmomenteinleitung.
- ein Festkörperdämpfungselement: Dieses Element kennzeichnet sich dadurch, dass es keine hydraulischen und/oder pneumatischen Dämpfungselemente aufweist und damit in vorteilhafter Weise gegenüber dem Stand der Technik eine erhöhte Unempfindlichkeit gegenüber Temperatureinflüsse aufweist. Die Dämpfungseigenschaften werden durch die verwendeten Festkörpermaterialien oder auch durch Festkörperreibung realisiert. Ein Festkörperdämpfungselement umfasst vorzugsweise mehrere Dämpfungsteilelemente, die weiter bevorzugt in axialer Richtung in Reihe (seriell) angeordnet sind und jeweils für die Dämpfung in einen bevorzugten Frequenz- und/oder Amplitudenbereich vorgesehen sind. Erfindungsgemäß umfasst es mindestens ein Graugusselement, insbesondere geeignet für eine Dämpfung insbesondere Schwingungen mit kleinen Amplituden und, optional, mindestens ein Reibfederelement insbesondere geeignet für eine Dämpfung insbesondere Schwingungen höherer Amplituden insbesondere in axialer Richtung oder in axialen Richtungsanteilen (vektoriell). Das Reibfederelement weist dabei vorzugsweise zumindest eine Nachgiebigkeit in axialer Richtung.
- einen Kraftsensor zur Erfassung von Kräften in axialer Richtung.

Vorzugsweise sind die vorgenannten Komponenten in der vorgenannten Reihenfolge angeordnet. Dann werden in vorteilhafter Weise zunächst die von der Bohrmaschine eingebrachten rotatorischen Momente in der axial drehbaren Drehmomenteinleitung aufgenommen und an die Mittel zur Einleitung eines Brems- oder eines Antriebsmoment in die Drehmomenteinleitung weitergeleitet. Die von der Bohrmaschine eingebrachten translatorischen Belastungsanteile werden wiederum von der Drehmomenteinleitung an das Festkörperdämpfungselement weitergeleitet, vorzugsweise direkt in das (mindestens eine) Graugusselement. In diesem werden die Frequenzen der translatorischen Belastungsanteile mit zunehmender Frequenz gedämpft, während die verbleibenden Frequenzen an das (mindestens eine) Reibfederelement weitergeleitet und dort gedämpft werden. Insbesondere die statischen Axiallasten werden von da aus an den vorgenannten Kraftsensor weitergeleitet und erfasst. Der Kraftsensor ist vorzugsweise auf einem festen Boden oder einem anderen festen Untergrund wie z.B. einer Wandung oder einem Fundament befestigt.

Eine weitere bevorzugte Ausgestaltung sieht vor, das Reibfederelement, das mindestens eine Graugusselement und/oder das mindestens eine Reibfederelement zwischen der Drehmomenteinleitung und dem Kraftsensor angeordnet ist. Dämpfungselemente und Kraftsensor sind in dieser Ausgestaltung in vorteilhafter Weise von rotierenden Bewegungen entkoppelt.

Eine weitere bevorzugte Ausgestaltung sieht vor, das Reibfederelement zwischen dem Kraftsensor und dem mindestens einem Graugusselement anzuordnen, verbunden mit dynamischen Vorteilen u.A. bei der Erfassung der auf den Ersatzgrund einwirkenden Belastung.

Eine weitere bevorzugte Ausgestaltung sieht vor, zwischen dem mindestens einem Dämpfungselement und Drehmomenteinleitung ein Axiallager vorzusehen.

Eine bevorzugte Ausgestaltung sieht mindestens ein Axiallager vor, das eine Verdrehbarkeit aller oder ein Teil der Komponenten, zumindest aber der Drehmomenteinleitung um eine in axialer Richtung ausgerichtete Drehachse ermöglicht.

Vorzugsweise ist das Axiallager zwischen der Drehmomenteinleitung und dem Festkörperdämpfungselement angeordnet, wobei die Mittel zur Einleitung eines Brems- oder eines Antriebsmoments unmittelbar in die Drehmomenteinleitung. Dadurch wird in vorteilhafter Weise die rotierende Masse und die von den Mitteln zur Einleitung eines Brems- oder eines Antriebsmoments auf ein notwendiges Minimum reduziert. Dies bedeutet, dass nur die Drehmomenteinleitung zuzüglich zumindest eines Teils der Übertragungsmittel für eine Rotationsbewegung vorgesehen sind, während das Festkörperdämpfungselement und der Kraftsensor dieser Rotationsbewegung nicht folgen, vorzugsweise fest, d.h. rotationsstarr fixiert sind.

Graugusselement mit Drehmomenteinleitung, Reibfederelement und Kraftsensor bilden zusammen ein Massen-Feder-Element in axialer Richtung, das durch die eingeprägten schlagenden Impulse durch die Bohrmaschine angeregt wird. Dabei bildet idealisiert das Graugusselement mit Drehmomenteinleitung eine gemeinsame Masse, während das Reibfederelement mit dem Kraftsensor die Feder bildet. Zugleich bilden Graugusselement und Reibfederelement die Dämpfelemente. Idealerweise sind die Einzelkomponenten des Massen-Feder-Element starr miteinander verbunden.

Andererseits wird im Rahmen einer bevorzugten Ausgestaltung vorgeschlagen, ein Axiallager zwischen Drehmomenteinleitung und Graugusselement einzusetzen. Auch wird dabei bevorzugt vorgeschlagen, die Drehmomenteinleitung an die Mittel zur Einleitung eines Brems- oder eines Antriebsmoment direkt an die Drehmomenteinleitung anzubinden. Beides sind konstruktive Maßnahmen, die sich unmittelbar auf das Schwingungsverhalten des vorgenannten Massen-Feder-Elements in axialer Richtung grundsätzlich auswirken. Um diese Auswirkungen möglichst gering zu halten, wird vorgeschlagen, die Masse der Drehmomenteinleitung auf maximal 10%, vorzugsweise 5% der Masse des (mindestens einen) Graugusselements zu begrenzen und andere die Mittel zur Einleitung eines Brems- oder eines Antriebsmoment in axialer Richtung möglichst von der Drehmomenteinleitung zu entkoppeln, beispielsweise realisierbar durch einen Zahnriemen- oder einen Riemenantrieb. Insbesondere dann ist es vorteilhaft, die Testvorrichtung bevorzugt mit einem Rahmen auszugestalten, wobei der Testgrund, d.h. umfassend die Reihenschaltung der vorgenannten Komponenten aufbauend auf dem Kraftsensor in axialer Richtung vertikal nach oben vorzusehen und im Rahmen zu führen, während die Mittel zur Einleitung eines Brems- oder eines Antriebsmoment in axialer Richtung, insbesondere die vorgenannten Erzeugungsmittel, wie vorzugsweise einen Elektromotor oder eine elektromotorische Bremse, möglichst vollständig im Rahmen fixiert und von Bewegungen und Impulsen in axialer Richtung entkoppelt sind.

Eine alternative vorteilhafte Ausgestaltung sieht zumindest mehrere Graugusselemente als Teilelemente vor, die weiter bevorzugt starr aneinander gekoppelt in Reihe geschaltet sind. Diese Bauform bietet sich insbesondere bei einem längeren Stab- oder Rohrförmigen Graugusselement an, wobei die Teilelemente je nach ihrer lokalen Lage und schlagenden Belastung durch eine Materialvariation unterschiedlich in ihrem Dämpfungsverhalten konfigurierbar und einsetzbar werden. Innerhalb einer Reihenschaltung der Teilelemente, werden schlagenden Belastungen in jedem Teilelement gedämpft und auf diese Weise modifiziert an das nächste Teilelement weitergegeben. In diesem Zusammenhang wird vorgeschlagen, das Dämpfungsverhalten der unmittelbar an die Drehmomenteinleitung angrenzenden Teilelemente zunächst auf hohe zu dämpfende Frequenzen, vorzugsweise zwischen 200 und 1000 Hz auszulegen und die darauffolgenden Teilelemente in ihren ausgelegten Frequenzbereichen schrittweise nach unten abzustufen.

Die Erfindung löst das Problem einer dosierebaren Rückkopplung der Schlagkraft auf eine Bohrmaschine, vorzugsweise einen Bohrhammer durch die Zuweisung der Steifigkeit, Masse und Dämpfung zu einzelnen Gestaltelementen. Durch diese Zuweisung ist das dynamische Schwingungsverhalten insbesondere gegenüber herkömmlichen hydraulischen oder pneumatischer Systeme exakter und reproduzierbarer beeinflussbar. Die Rückkopplung eines Schlages auf den Bohrhammer ist dadurch realistischer abbildbar.

Eine Kombination aus Reibfeder und Graugusselement umgeht die Nachteile fluidisch betriebener Testvorrichtungen. Sie sind zudem konstruktiv und stofflich flexibel ausgestaltbar. Der Kraftsensor ermöglicht zusätzlich die quantitative Erfassung und Regelung einer mechanischen Rückkopplung auf den Bohrhammer.

Die Erfindung wird anhand von weiteren Ausführungsbeispielen, den folgenden Figuren und Beschreibungen näher erläutert. Alle dargestellten Merkmale und deren Kombinationen sind nicht nur auf diese Ausführungsbeispiele und deren Ausgestaltungen begrenzt. Vielmehr sollen diese stellvertretend für weitere mögliche, aber nicht explizit als Ausführungsbeispiele dargestellte weitere Ausgestaltungen kombinierbar angesehen werden. Es zeigen
**Fig.1** eine prinzipielle Ansicht der Testvorrichtung mit Ersatzuntergrund gemäß eines bevorzugten Ausführungsbeispiels,
**Fig.2** eine perspektivische Detailschnittdarstellung der axial drehbaren Drehmomenteinleitung mit Mitteln zur Einleitung eines Brems- oder eines Antriebsmoment unmittelbar in die Drehmomenteinleitung gemäß dem bevorzugten Ausführungsbeispiel der Textvorrichtung gemäß **Fig.1** sowie
**Fig.3** eine Detailansicht des Reibfederelement und des Kraftsensors gemäß dem bevorzugten Ausführungsbeispiel der Textvorrichtung gemäß **Fig.1****.**

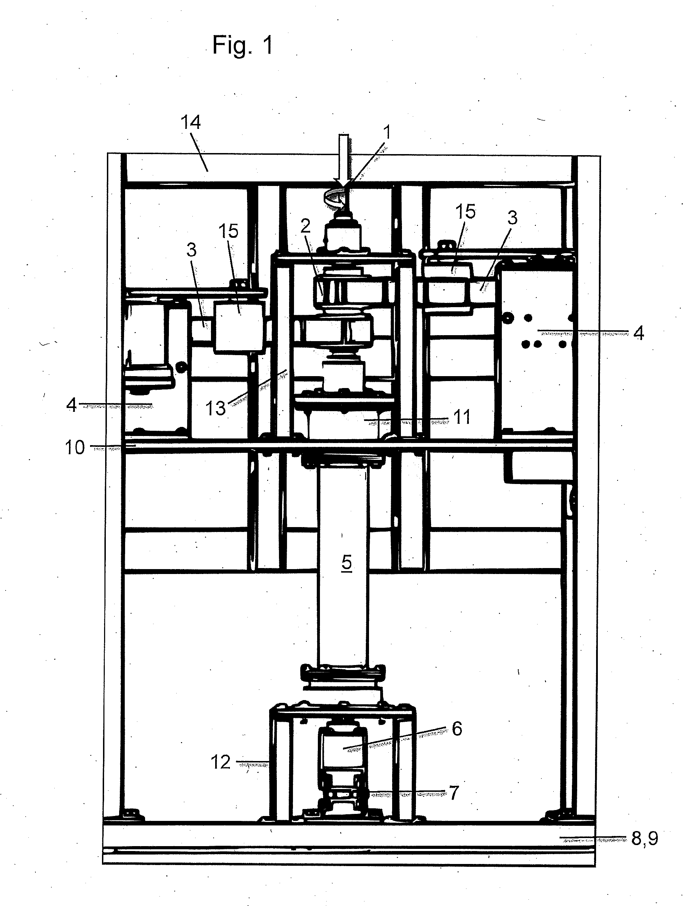

**Fig.1** zeigt den Aufbau und die Bestandteile einer bevorzugten Ausgestaltung mit einer Reihenschaltung einer Schlag- und Drehmomenteinleitung **1** mit zwei Zahnriemenräder **2** (jeweils mit Zahnriemen **3** mit Riemenspannrollen **15** und elektrischen Bremsmotor **4** als Mittel zur Einleitung eines Brems- oder eines Antriebsmoment in die Drehmomenteinleitung), einem Graugusszylinder **5** als Graugusselement, einem Reibfederelement **6** und einer Kraftmessdose **7** als Kraftsensor. Die axiale Richtung der Reihenschaltung ist vertikal ausgerichtet, wobei der Kraftsensor auf einer unteren ersten Traverse **8** eines Rahmens **9** der Testvorrichtung fixiert ist. Eine zweite mittlere Traverse **10** führt den Graugusszylinder **5** axial und dient zugleich als Drehmomentstütze. Ferner ist zwischen Graugusszylinder und Drehmomenteinleitung ein Axiallager **11** angeordnet. Zwei Hilfsrahmen **12** und **13** dienen der zusätzlichen Stabiliserung und Führung des Reibfederelements auf der Kraftmessdose bzw. der Drehmomenteinleitung auf dem Axiallager. Den oberen Abschluss des Rahmens der Testvorrichtung bildet eine obere dritte Traverse **14.** Sie dient zudem als eine Plattform für die Befestigung einer nicht weiter dargestellten Halte- und Verfahrvorrichtung für eine zu testende Bohrmaschine.

Eine schlagende Bohrmaschine oder ein Bohrhammer mit ist mit der Schlag- und Drehmomenteinleitung **1** verbunden. Durch ein mechanisches bzw. elektropneumatische Schlagwerk und den rotatorischen Antrieb des Bohrhammers wird eine Schlagkraft mit überlagertem Drehmoment auf den Ersatzuntergrund übertragen. Das eingeleitete Drehmoment wird auf das treibende Riemenrad **2** übertragen und auf einen Zahnriemen weitergeleitet. Dieser überträgt das Drehmoment auf das getriebene Riemenrad und die elektromotorische Bremse **4.** Durch ein Axiallager **11** wird die Drehbewegung vom nicht drehenden Graugusszylinder **5** entkoppelt.

Die Schlagkraft wird von der Schlag- und Drehmomenteinleitung, über das Axiallager hinweg auf den Graugusszylinder übertragen. Dieser übernimmt die dämpfende Funktion, indem er einen Teil der Schlagkraft in Wärme umwandelt. Der nicht umgewandelte Teil der Schlagkraft wird in die Reibfeder **6** übertragen und dort ebenfalls in Wärme umgewandelt. Die Reaktionskraft aus dem Schlagvorgang zur Umgebung wird mit einem Kraftsensor **7** erfasst.

**Fig.1** zeigt ferner eine Symmetrieachse in axialer Richtung für die Komponenten des Ersatzuntergrunds, insbesondere für die Schlag- und Drehmomenteinleitung **1** mit Riemenrad **2,** das Axiallager **11,** den Graugusszylinder **5,** das Reibfederelement **6** und einer Kraftmessdose **7.**

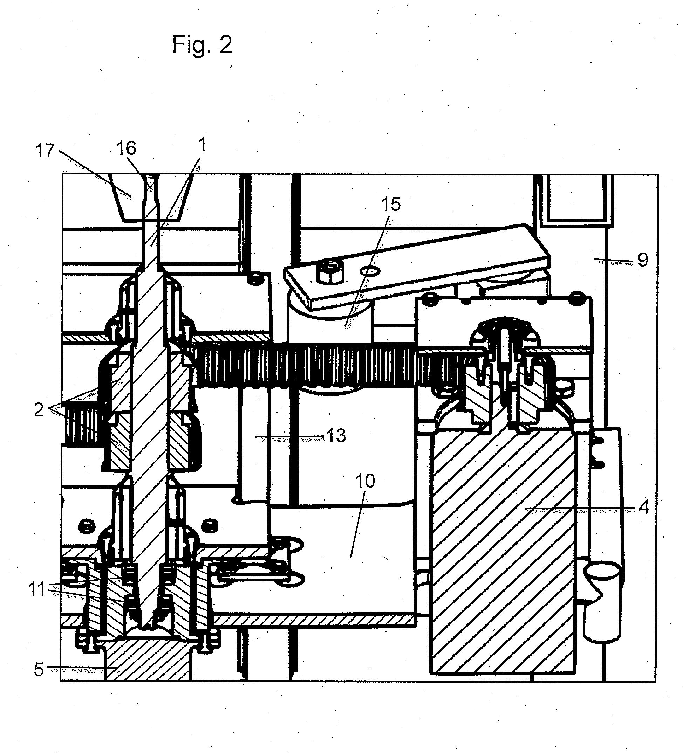

**Fig.2** zeigt eine perspektivische Detailschnittdarstellung die Schlag- und Drehmomenteinleitung **1** mit Mitteln zur Einleitung eines Brems- oder eines Antriebsmoment gemäß dem bevorzugten Ausführungsbeispiel der Textvorrichtung gemäß **Fig.1** (nur rechter Bereich mit nur dem dort angeordneten Bremsmotor **4).** Dargestellt ist ein Schnitt mittig und in axialer Richtung durch die Drehmomenteinleitung und sowie durch einen elektrischen Bremsmotor **4,** während die hinter der Schnittebene dargestellten Details perspektivisch dargestellt sind. Die genannten Mittel umfassen zwei direkt um die Drehmomenteinleitung fixierte Zahnriemenräder **2** für jeweils einen Zahnriemen **3** mit Riemenspannrollen **15** und einen elektrischen Bremsmotor **4.** Die Schlag- und Drehmomenteinleitung **1** endet oben in der Darstellung in ein Wellenende **16,** das direkt in ein Bohrfutter **17** einer Bohrmaschine einspannbar ist. Die Drehmomenteinleitung **1** endet unten in der Darstellung in eine Stufenwelle für die Aufnahme in ein Axiallager **11** zum Graugusszylinder **5** hin. Eine zweite mittlere Traverse verhindert oder reduziert als Drehmomentstütze insbesondere eine Verdrehung des Graugusszylinders.

Ein Drehmoment wird von der Schlag- und Drehmomenteinleitung **1** über ein Zahnriemenrad auf den Zahnriemen übertragen. Der Bremsmotor **4** nimmt das Drehmoment auf und bremst dadurch die Drehmomenteinleitung **1.** Die Bremsmomente gleichen den für den Bohrprozess notwendigen Drehmomenten.

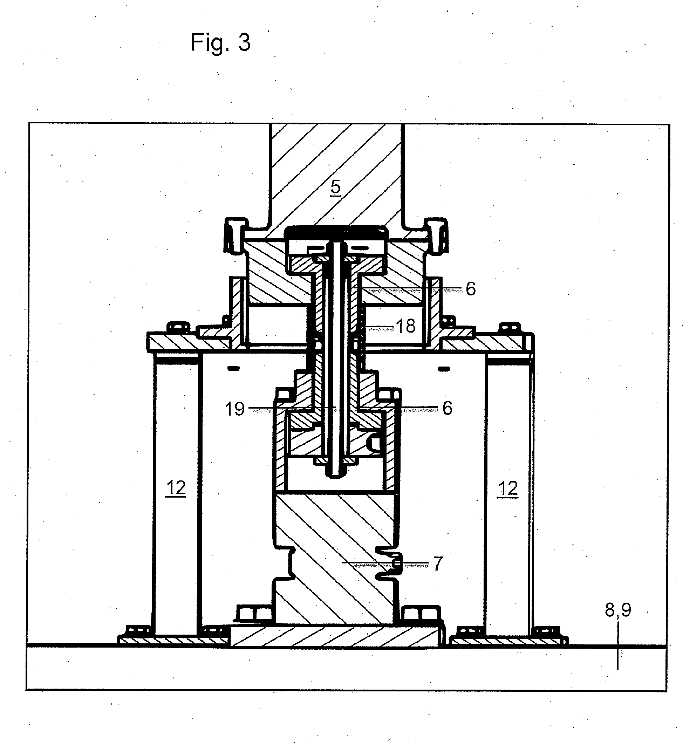

**Fig.3** zeigt in einer Detailschnittdarstellung den Aufbau der Schlagdämpfung. Die vom Bohrhammer aufgenommene Schlagkraft wird über den nicht drehenden Graugusszylinder **5** auf das Reibfederelement **6** und von diesem auf eine Kraftmessdose **7** als Kraftsensor übertragen. Ein Teil der Schlagenergie wird durch Festkörperreibung im Graugusswerkstoff im Graugusszylinder **5** absorbiert und in Wärme gewandelt. Der nicht gewandelte Teil wird auf ein vorgespanntes Ringfederelement **18** übertragen. Die Vorspannung wird durch die Verschraubung einer Gewindestange **19** mit Graugusszylinder **5** und Sensoradapter **20** erreicht. Die Anbindung der Schlagdämpfung zur Umgebung wird durch den Kraftsensor **7** vervollständigt.

### Literatur:

[1] www.ecolight.de/pruefstandstechnik/Bohrer/Bohrerhaupt.html, Stand 16.05.2018

### Bezugszeichenliste:

1 Schlag- und Drehmomenteinleitung
2 Zahnriemenräder
3 Zahnriemen
4 Elektrischer Bremsmotor
5 Graugusszylinder
6 Reibfederelement
7 Kraftmessdose
8 erste untere Traverse
9 Rahmen
10 zweite mittlere Traverse
11 Axiallager
12 Hilfsrahmen
13 Hilfsrahmen
14 obere dritte Traverse
15 Riemenspannrolle
16 Wellenende
17 Bohrfutter
18 Ringfederelement
19 Gewindestange
20 Sensoradapter
21 Symmetrieachse

## Patentansprüche

1. Testvorrichtung für schlagende Bohrmaschinen oder Bohrhämmer mit einem Ersatzuntergrund, umfassend eine in eine axiale Richtung orientiere Aufreihung von Komponenten, umfassend:
a) eine axial drehbare Schlageinleitung,
b) ein Festkörperdämpfungselement **(5, 6)** sowie
c) einen Kraftsensor **(7)** zur Erfassung von Kräften in axialer Richtung,
**dadurch gekennzeichnet, dass**
d) die Schlageinleitung eine axial drehbare Schlag- und Drehmomenteinleitung **(1)** ist,
e) Mittel **(2, 3, 4, 15)** zur Einleitung eines Brems- oder eines Antriebsmoment in die Drehmomenteinleitung vorgesehen sind,
f) die Mittel, das Festkörperdämpfungselement sowie der Kraftsensor der axial drehbare Schlag- und Drehmomenteinleitung nachgeschaltet sind und
g) das Festkörperdämpfungselement mindestens ein Graugusselement **(5)** umfasst.

2. Testvorrichtung nach Anspruch 1, **dadurch gekennzeichnet, dass** das Dämpfungselement mindestens ein Reibfederelement **(6)** umfasst.

3. Testvorrichtung nach Anspruch 2, **dadurch gekennzeichnet, dass** das mindestens eine Reibfederelement **(6)** zumindest eine Nachgiebigkeit in axialer Richtung aufweist.

4. Testvorrichtung nach Anspruch 2 oder 3, **dadurch gekennzeichnet, dass** das mindestens eine Graugusselement **(5)** und das mindestens eine Reibfederelement **(6)** in axialer Richtung orientiert seriell aufgereiht sind.

5. Testvorrichtung nach einem der Ansprüche 2 bis 4, **dadurch gekennzeichnet, dass** zwischen das mindestens eine Graugusselement **(5)** und/oder das mindestens eine Reibfederelement **(6)** zwischen der Schlag- und Drehmomenteinleitung **(1)** und dem Kraftsensor **(7)** angeordnet ist.

6. Testvorrichtung nach Anspruch 5, **dadurch gekennzeichnet, dass** das mindestens eine Reibfederelement **(6)** zwischen dem Kraftsensor **(7)** und dem mindestens einem Graugusselement **(5)** angeordnet ist.

7. Testvorrichtung nach einem der vorgenannten Ansprüche, **dadurch gekennzeichnet, dass** zwischen dem Festkörperdämpfungselement **(5, 6)** und Schlag- und Drehmomenteinleitung **(1)** ein Axiallager **(11)** vorgesehen ist.

8. Testvorrichtung nach einem der vorgenannten Ansprüche, **dadurch gekennzeichnet, dass** die Mittel zur Einleitung eines Brems- oder eines Antriebsmoment einen Elektromotor **(4)** oder eine elektromotorische Bremse umfassen.

9. Testvorrichtung nach einem der vorgenannten Ansprüche, **dadurch gekennzeichnet, dass** die Mittel zur Einleitung eines Brems- oder eines Antriebsmoment einen Riementrieb mit Antriebsriemen **(3)** und Riemenscheiben **(2)** umfassen.

10. Testvorrichtung nach einem der vorgenannten Ansprüche, **dadurch gekennzeichnet, dass** die Mittel zur Einleitung eines Brems- oder eines Antriebsmoment unmittelbar an die Schlag- und Drehmomenteinleitung **(1)** angebunden ist.

11. Testvorrichtung nach einem der vorgenannten Ansprüche, **dadurch gekennzeichnet, dass** die axiale Richtung in vertikaler Richtung orientiert ist.

12. Testvorrichtung nach einem der vorgenannten Ansprüche, **dadurch gekennzeichnet, dass** die axiale Richtung einer Geraden folgt.

13. Testvorrichtung nach Anspruch 12, **dadurch gekennzeichnet, dass** die Gerade eine Symmetrieachse für um diese symmetrisch angeordnete Kraftübertragungsbereiche zwischen den Komponenten ist.

14. Testvorrichtung nach einem der vorgenannten Ansprüche, umfassend eine Halte- und Verfahrvorrichtung für einen Bohrhammer.

15. Testvorrichtung nach Anspruch 14, **dadurch gekennzeichnet, dass** die Halte- und Verfahrvorrichtung mindestens ein Verfahrmittel in axialer Richtung umfasst.

## Claims

1. Test device for impacting drilling machines or drilling hammers with a substitute substrate, comprising an array of components oriented in an axial direction, comprising:
a) An axially rotatable impact initiator,
b) a solid body damping element (5, 6), and
c) a force sensor (7) for detecting forces in the axial direction,
**characterised in that**
d) the initiator is an axially rotatable impact and torque initiator (1),
e) means (2, 3, 4, 15) are provided for initiating a braking torque or drive torque into the torque initiation,
f) the means, the solid body damping element, and the force sensor of the axially rotatable impact and torque initiator are arranged downstream and
g) the solid body damping element comprises at least one grey cast iron element (5).

2. Test device according to claim 1, **characterised in that** the damping element comprises at least one friction spring element (6).

3. Test device according to claim 2, **characterised in that** the at least one friction spring element (6) exhibits at least a degree of flexibility in the axial direction.

4. Test device according to claim 2 or 3, **characterised in that** the at least one grey cast iron element (5) and the at least one friction spring element (6) are arranged oriented in serial fashion in the axial direction.

5. Test device according to any one of claims 2 to 4, **characterised in that** the at least one grey cast iron element (5) and/or the at least one friction spring element (6) is arranged between the impact and torque initiator (1) and the force sensor (7).

6. Test device according to claim 5, **characterised in that** the at least one friction spring element (6) is arranged between the force sensor (7) and the at least one grey cast iron element (5).

7. Test device according to any one of the preceding claims, **characterised in that** an axial bearing (11) is provided between the solid body damping element (5, 6) and the impact and torque initiator (1).

8. Test device according to any one of the preceding claims, **characterised in that** the means for initiating a braking or drive torque comprise an electric motor (4) or an electric motor brake.

9. Test device according to any one of the preceding claims, **characterised in that** the means for initiating a braking or drive torque comprise a belt drive with drive belts (3) and belt pulleys (2).

10. Test device according to any one of the preceding claims, **characterised in that** the means for initiating a braking or drive torque is connected directly to the impact and torque initiator (1).

11. Test device according to any one of the preceding claims, **characterised in that** the axial direction is oriented in the vertical direction.

12. Test device according to any one of the preceding claims, **characterised in that** the axial direction follows a straight line.

13. Test device according to claim 12, **characterised in that** the straight line is an axis of symmetry for force transfer regions between the components arranged symmetrically about this axis.

14. Test device according to any one of the preceding claims, comprising a holding and travel device for a drilling hammer.

15. Test device according to claim 14, **characterised in that** the holding and travel device comprises at least one travel means in the axial direction.

## Revendications

1. Dispositif d'essai pour une foreuse à percussion ou un marteau perforateur avec un sous-sol factice, comportant une série de composants orientés dans la direction axiale, à savoir :
a) une entrée d'impact, rotative, axiale,
b) un élément amortisseur solide (5, 6) ainsi que,
c) un capteur dynamométrique (7) pour saisir les efforts dans la direction axiale,
dispositif **caractérisé en ce que**
d) l'entrée d'impact est une entrée d'impact et de couple tournant axialement (1),
e) des moyens (2, 3, 4, 15) sont prévus pour introduire un couple de freinage ou d'entraînement dans l'entrée de couple,
f) des moyens sont prévus en aval de l'élément amortisseur solide et du capteur dynamométrique de l'entrée d'impact et de coupe tournant axialement, et
g) l'élément amortisseur solide comprend au moins un élément en fonte grise (5).

2. Dispositif d'essai selon la revendication 1,
**caractérisé en ce que**
l'élément amortisseur comprend au moins un élément à ressort à friction (6).

3. Dispositif d'essai selon la revendication 2,
**caractérisé en ce que**
au moins un élément de ressort à friction (6) présente de la souplesse dans la direction axiale.

4. Dispositif d'essai selon la revendication 2 ou 3,
**caractérisé en ce que**
l'élément en fonte grise (5) et l'élément à ressort de friction (6) sont en série orientés dans la direction axiale.

5. Dispositif d'essai selon l'une des revendications 2 à 4,
**caractérisé en ce que**
un élément en fonte grise (5) et/ou au moins un élément de ressort à friction (6) sont prévus entre l'entrée d'impact et de couple (1) et le capteur dynamométrique (7).

6. Dispositif d'essai selon la revendication 5,
**caractérisé en ce que**
au moins un élément de ressort à friction (6) est prévu entre le capteur dynamométrique (7) et l'élément en fonte grise (5).

7. Dispositif d'essai selon l'une des revendications précédentes,
**caractérisé en ce que**
un palier axial (11) est prévu entre l'élément amortisseur solide (5, 6) et l'entrée d'impact et de couple (1).

8. Dispositif d'essai selon l'une des revendications précédentes,
**caractérisé en ce que**
les moyens pour appliquer en entrée un couple de freinage et/ou d'entraînement comprennent un moteur électrique (4) ou un frein à moteur électrique.

9. Dispositif d'essai selon l'une des revendications précédentes,
**caractérisé en ce que**
les moyens pour appliquer un couple de freinage ou d'entraînement comprennent un entraînement par courroie avec une courroie d'entraînement (3) et des poulies à courroie (2).

10. Dispositif d'essai selon l'une des revendications précédentes,
**caractérisé en ce que**
les moyens pour appliquer un couple de freinage ou d'entraînement sont reliés directement à l'entrée d'impact et de couple (1).

11. Dispositif d'essai selon l'une des revendications précédentes,
**caractérisé en ce que**
la direction axiale est orientée dans la direction verticale.

12. Dispositif d'essai selon l'une des revendications précédentes,
**caractérisé en ce que**
la direction axiale est une droite.

13. Dispositif d'essai selon la revendication 12,
**caractérisé en ce que**
la droite est l'axe de symétrie des zones de transmission de force entre les composants, ces zones étant organisées de manière symétrique.

14. Dispositif d'essai selon l'une des revendications précédentes, comprenant :
un dispositif de fixation et de déplacement pour un perforateur.

15. Dispositif d'essai selon la revendication 14,
**caractérisé en ce que**
le dispositif de maintien et de déplacement comprend au moins un moyen de déplacement dans la direction axiale.
